Europäisches Patentamt

European Patent Office

Office européen des brevets

(11) Veröffentlichungsnummer: **0 133 183**
**A1**

(12) # EUROPÄISCHE PATENTANMELDUNG

(21) Anmeldenummer: 83107218.6

(51) Int. Cl.⁴: **B 60 N 1/02**

(22) Anmeldetag: 22.07.83

(43) Veröffentlichungstag der Anmeldung: **20.02.85**
**Patentblatt 85/8**

(71) Anmelder: **KEIPER RECARO GmbH & Co.,**
**Büchelstrasse 54-58, D-5630 Remscheid 14 (DE)**

(72) Erfinder: **Leipold, Volker, Dipl.-Ing., Breslauer Strasse 1,**
**D-6760 Rockenhausen (DE)**

(74) Vertreter: **Patentanwälte Phys. Bartels, Dipl.-Ing. Fink**
**Dipl.-Ing. Held, Lange Strasse 51,**
**D-7000 Stuttgart 1 (DE)**

(84) Benannte Vertragsstaaten: **FR GB IT**

(54) **Steuereinrichtung für eine Mehrzahl von Verstellmotoren eines Kraftfahrzeuges.**

(57) Bei einer Steuereinrichtung für eine Mehrzahl von Verstellmotoren (10 bis 17) eines Kraftfahrzeuges mit dem Ein- und Ausschalten sowie der Drehrichtungsumkehr der Verstellmotoren (10 bis 17) dienenden Relais (R1 bis R6) und einer Ansteuerung der Relais und/oder dem Zugang zu einer Elektronik dienenden Tastatur ist jeder der Verstellmotoren (10 bis 17) einer ersten oder einer zweiten Gruppe zugeordnet, die mittels eines Gruppenwahlschalters (21) auswählbar sind. Jedes der als Motorschalter dienenden, einen Wechslerkontakt (k1 bis k4) aufweisenden Relais (R1 bis R4) liegt mit seiner einen Schaltstrecke im Stromkreis eines der der ersten Gruppe zugeordneten Verstellmotoren (10, 12, 14, 16) und mit seiner anderen Schaltstrecke im Stromkreis eines der zweiten Gruppe zugeordneten Verstellmotor (11, 13, 15, 17).

ACTORUM AG

PATENTANWÄLTE
EUROPEAN
PATENT ATTORNEYS

Phys. H. Bartels
Dipl.-Ing. H. Fink
Dr.-Ing. M. Held

ZUGELASSENE VERTRETER BEIM
EUROPÄISCHEN PATENTAMT

Lange Str. 51, D-7000 Stuttgart 1
Tel. (0711) 296310 u. 297295
Telex 0722312 (patwo d)

5. Juli 1982
Reg.-Nr. 126 554
Ref.: 3320rpk

KEIPER AUTOMOBILTECHNIK GMBH & CO. KG, 5630 Remscheid 14

---

Steuereinrichtung für eine Mehrzahl von Verstellmotoren eines Kraftfahrzeuges

---

Die Erfindung betrifft eine Steuereinrichtung für eine Mehrzahl von Verstellmotoren eines Kraftfahrzeuges mit dem Ein- und Ausschalten sowie der Drehrichtungsumkehr der Verstellmotoren dienenden Relais und einer der Ansteuerung dieser Relais und/oder dem Zugang zu einer Elektronik dienenden Tastatur.

Da der in einem Kraftfahrzeug in der Regel für den Einbau einer solchen Steuereinrichtung zur Verfügung stehende Raum sehr beschränkt ist, führen die bekannten Steuereinrichtungen dieser Art zu Einbauproblemen, wenn sie für eine größere Anzahl von Verstellmotoren konzipiert sind. Man hat sich deshalb in der Regel bisher auf wenige Verstellmöglichkeiten, beispielsweise die Längsverstellung des Fahrersitzes, seine Höhenver-

Postscheckamt Stuttgart 7211-700 BLZ 600 100 70
Deutsche Bank AG, 1428630    BLZ 600 700 70

Telefonische Auskünfte und Aufträge sind
nur nach schriftlicher Bestätigung verbindlich

stellung und die Verstellung der Neigungslage der Rückenlehne beschränkt, obwohl auch die Verstellbarkeit beispielsweise der Rückblickspiegel und/oder des Beifahrersitzes vorteilhaft wäre.

Der Erfindung liegt daher die Aufgabe zugrunde, eine Steuereinrichtung der eingangs genannten Art zu schaffen, die sich auch für eine Auslegung für eine größere Anzahl von Motoren eignet. Diese Aufgabe löst eine Steuereinrichtung mit den Merkmalen des Anspruches 1.

Durch die Zweifachausnutzung der als Motorschalter dienenden Relais läßt sich gegenüber den bekannten Steuereinrichtungen die Anzahl dieser Relais und, da diese im wesentlichen den Platzbedarf bestimmen, auch der Raumbedarf der Steuereinrichtung, nahezu auf die Hälfte verringern. Bei gleichem Platzbedarf im Vergleich zu den bekannten Steuereinrichtungen kann also die erfindungsgemäße Steuereinrichtung für nahezu die doppelte Anzahl von Motoren ausgelegt werden. Es ist dann beispielsweise möglich, dieselben Verstellmöglichkeiten, die der Fahrersitz aufweist, auch beim Beifahrersitz vorzusehen. Durch eine einfache Umschaltung mittels des Gruppenwahlschalters kann dann der eine oder andere Sitz unter Verwendung der gleichen Tastatur verstellt werden. Ein weiterer, wesentlicher Vorteil besteht darin, daß der Mehraufwand bei der erfindungsgemäßen Lösung für die zusätzlichen Verstellmöglichkeiten sehr gering ist.

Besonders vorteilhaft ist die Ausbildung der erfindungsgemäßen Steuereinrichtung gemäß den Ansprüchen 2 und 3, weil sich hierdurch ein besonders einfacher Schaltungsaufbau erreichen läßt.

Bei einer bevorzugten Ausführungsform ist die Ansteuerung der als Motorschalter dienenden Relais entsprechend Anspruch 4 ausgeführt. Beim Übergang von einer Steuerung der Verstellmotoren der einen Gruppe zu einer Steuerung der Verstellmotoren der anderen Gruppe ist dann ansteuerseitig nur eine Invertierung der gesamten Ansteuerlogik erforderlich.

- 3 -

Weiterhin ist es besonders vorteilhaft, wenn die Verbindung zwischen der Tastatur und der wenigstens einen Speicher enthaltenden Elektronik mit einer Schnittstelle versehen ist, zu der die Steuerleitungen für die Relais geführt sind. Dies ermöglicht einen modularen Aufbau. Die Steuerung der Verstellmotoren kann, sofern keine Elektronik vorhanden ist, mittels der Tastatur erfolgen. Ist die einen Automatikteil bildende Elektronik hinzugefügt, dann werden alle an der Schnittstelle ankommenden Signale auf entsprechende Ausgänge verteilt.

Vorzugsweise ist zumindest einem Teil der Verstellmotoren oder den von ihnen verstellbaren Teilen je ein Istwertgeber zugeordnet, wobei diese Istwertgeber vorzugsweise unter Umgehung der Schnittstelle an die Automatik angeschlossen sind. Um auch bei einer relativ großen Anzahl von Istwertgebern den Schaltungsaufwand so gering wie möglich zu halten, ist bei einer bevorzugten Ausführungsform eine Schaltung gemäß Anspruch 7 vorgesehen. Sofern der Widerstandswert der zwischen einem Abgriff eines Potentiometers und der Meßspannungsstelle liegenden Widerstandes wesentlich größer ist als der Widerstandswert des Potentiometers, ist der durch den Anschluß von zwei Potentiometern an eine einzige Meßspannungsstelle entstehende Fehler sehr gering. Er kann in aller Regel in Kauf genommen werden für den Vorteil, daß keine Einzelumschaltung der Istwertgeber erforderlich ist. Für eine Abfrage oder Abspeicherung der Istwerte der zweiten Gruppe ist nur eine Einschaltung dieser Gruppe mit Hilfe des Gruppenwahlschalters erforderlich, mittels dessen auch ein anderer Speicherbereich als derjenige gewählt werden kann, der der ersten Gruppe zugeordnet ist.

Im folgenden ist die Erfindung anhand eines in der Zeichnung dargestellten Ausführungsbeispiels im einzelnen erläutert. Es zeigen

Fig. 1    ein Blockschaltbild des Ausführungsbeispiels,

Fig. 2    das Schaltbild für zwei Gruppen von Verstellmotoren, von denen jede vier Motoren umfaßt,

- 4 -

Fig. 3  ein unvollständig dargestelltes Schaltbild
des der Ansteuerung der Relais dienenden Teils
der Elektronik,

Fig. 4  die Schaltung der Istwertgeber.

Eine Steuereinrichtung für acht Verstellmotoren, mittels deren
der Fahrersitz eines Kraftfahrzeuges in seiner Längsrichtung,
in seiner Höhe, seiner Neigung und in der Neigung seiner Rückenlehne verstellt werden kann und außerdem entweder der Beifahrersitz ebenso wie der Fahrersitz oder aber zwei Außenspiegel um
je zwei Achsen verstellt werden können, weist eine Tastatur 1,
mittels deren die erforderlichen Steuerbefehle und Daten eingegeben werden können, sowie als separaten Modul eine Elektronik
2 auf, die über eine Datenleitung 3 mit der Tastatur 1 verbunden ist. Im Ausführungsbeispiel ist zusätzlich eine Signalleitung 4 von der Tastatur zur Elektronik 2 vorgesehen, über welche Sonderbefehle geleitet werden. Die Datenleitung 3 ist mit
einer internen Standardschnittstelle 5 versehen, an der alle
von der Tastatur 1 oder der Elektronik 2 ankommenden Signale
auf die entsprechenden Ausgänge verteilt werden. Von der Schnittstelle 5 wird eine zweite Datenleitung 6 zu dem die Motoren und
deren Ansteuerschaltung umfassenden Teil 7 der Steuereinrichtung. Unter Umgehung der Schnittstelle 5 führt eine Verbindungsleitung 8 vom Teil 7 zur Elektronik 2. Dieser Aufbau ermöglicht
es, dann, wenn die Elektronik 2 fehlt, die Motoren mittels der
Tastatur zu steuern.

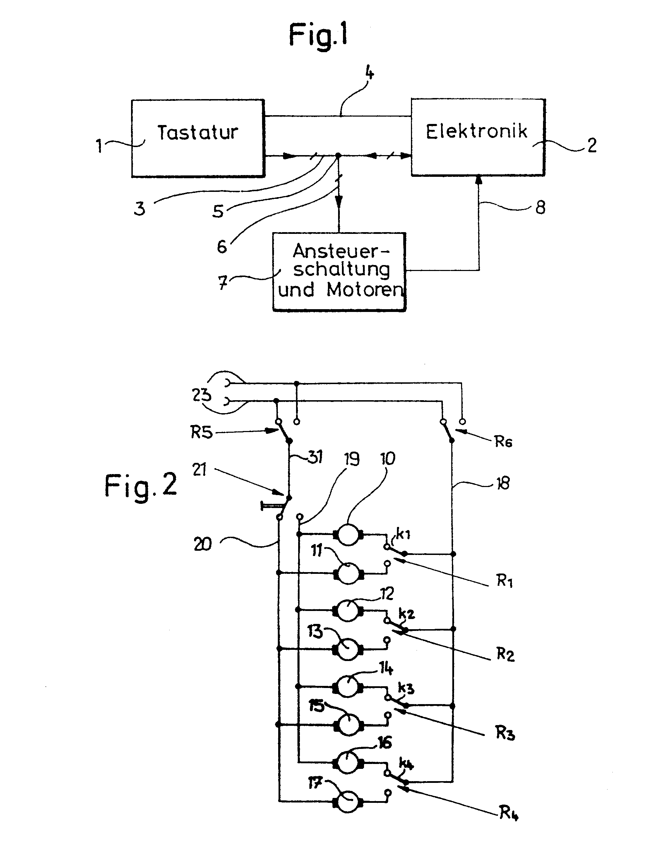

Wie Fig. 2 zeigt, sind die als Verstellantriebe dienenden Verstellmotoren 10 bis 17 zwei verschiedenen Gruppen zugeordnet,
und zwar derart, daß die Verstellmotoren 10, 12, 14 und 16 eine
erste Gruppe und die Verstellmotoren 11, 13, 15 und 17 eine
zweite Gruppe bilden. Die Verstellmotoren der ersten Gruppe
dienen der Verstellung des Fahrersitzes, diejenigen der zweiten
Gruppe der Verstellung des Beifahrersitzes oder der Verstellung
von zwei Außenspiegeln um je zwei Achsen. Alle Verstellmotoren
sind Gleichstrommotoren, die vom Bordnetz mit Energie versorgt
werden.

- 5 -

Durch diese Zusammenfassung der Verstellmotoren 10 bis 17 in zwei Gruppen ist es möglich, mit vier handelsüblichen Hochstromrelais, die nur einen Wechslerkontakt haben, alle acht Motoren ein- und auszuschalten. Hierzu sind, wie Fig. 2 zeigt, die beiden durch jeden der Wechslerkontakte k1 bis k4 gebildeten beiden Schaltstrecken jedes der als Motorschalter dienenden Relais R1 bis R4 so geschaltet, daß im einen Schaltzustand des Relais ein Motor der ersten Gruppe und im anderen Schaltzustand ein Motor der zweiten Gruppe mit einer ersten Zuleitung 18 verbunden ist. Andererseits sind die Motoren 10, 12, 14 und 16 mit einer gemeinsamen zweiten Zuleitung 19 und die Motoren 11, 13, 15 und 17 mit einer zweiten gemeinsamen Zuleitung 20 verbunden. Diese beiden zweiten Zuleitungen führen zu einem Wechslerkontaktsatz eines von Hand betätigbaren Gruppenwahlschalters 21, der je nach seiner Schaltstellung die eine oder andere der beiden zweiten Zuleitungen 19 bzw. 20 mit einem Wechslerkontakt eines Relais R5 verbindet. Dieses Relais R5 kann wahlweise den Eingang des Gruppenwahlschalters 21 mit dem einen oder anderen Pol des Bordnetzes verbinden, das in Fig. 2 symbolisch durch die beiden Leitungen 23 dargestellt ist. Ebenso ist die erste Zuleitung 18 mittels eines Relais R6 wahlweise mit den beiden Polen des Bordnetzes verbindbar. Mittels der beiden Relais R5 und R6, welche wie die Relais R1 bis R4 ausgebildet sind, kann wahlweise ein Rechtslauf oder ein Linkslauf der Verstellmotoren 10 bis 17 eingestellt werden. Außerdem können diese Motoren mit Hilfe der Relais R5 und R6 zum Zwecke der Abbremsung kurzgeschlossen werden.

Aus Gründen der Betriebssicherheit ist es vorteilhaft, wenn zunächst der Gruppenwahlschalter 21 in die erforderliche Schaltstellung gebracht und das dem einzuschaltenden Motor zugeordnete Relais angesteuert wird und dann erst der ausgewählte Motor je nach der gewünschten Drehrichtung durch eine entsprechende Ansteuerung der Relais R5 und R6 eingeschaltet wird. Entsprechend werden zweckmäßigerweise die Verstellmotoren mittels der Relais R5 und R6 vom Bordnetz getrennt und nicht mittels der Relais R1 bis R4.

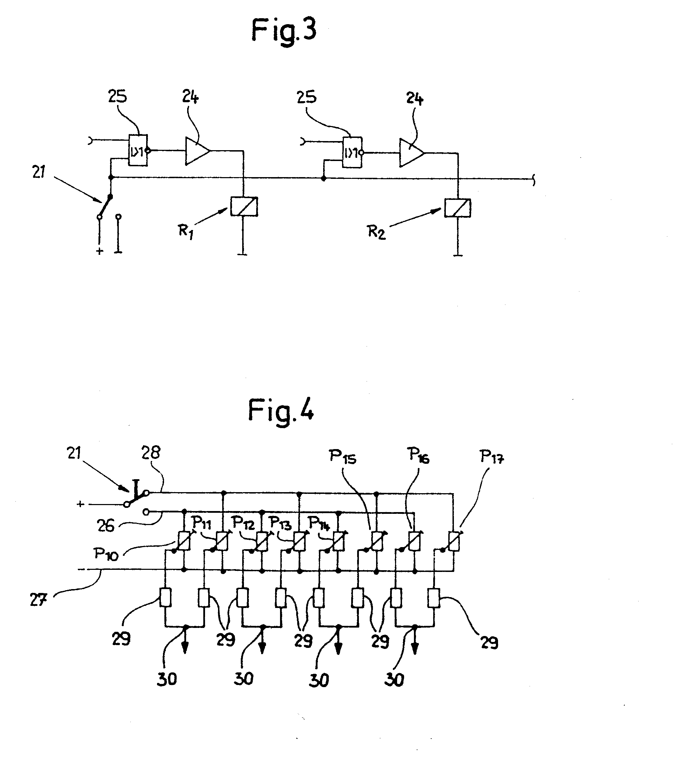

Damit die einen Teil der Elektronik 2 bildende Ansteuerlogik der Relais R1 bis R4 möglichst einfach ausgebildet werden kann, wird die gesamte Ansteuerlogik für den Übergang von einer Ansteuerung der Relais R1 bis R4 bei einer Auswahl der einen Motorgruppe auf eine Ansteuerung bei der Auswahl der anderen Motorgruppe invertiert. Die Ansteuerschaltung der Relais R1 bis R4 ist daher in der in Fig. 3 dargestellten Weise ausgebildet. Die Erregerwicklung jedes der Relais R1 bis R4 ist einerseits mit Masse und andererseits mit dem Ausgang eines Verstärkers 24 verbunden, dessen Eingang an den Ausgang eines Inversionsgliedes 25 angeschlossen ist. Dem einen Eingang des Inversionsgliedes 25 werden die Schaltbefehle zugeführt, während der andere Eingang mit einem zweiten Wechslerkontaktsatz des Gruppenwahlschalters 21 verbunden ist. Mittels dieses zweiten Wechslerkontaktsatzes kann der zweite Eingang aller Inversionsglieder 25 wahlweise mit Masse oder dem spannungsführenden Pol des Bordnetzes verbunden werden. Ein Einschaltbefehl, der den zugeordneten Eingang des Inversionsgliedes 25 erreicht, bewirkt hierdurch unabhängig von der Stellung des Gruppenwahlschalters 21, daß das nachgeschaltete Relais den durch die Stellung des Gruppenwahlschalters ausgewählten Motor mit der ersten Zuleitung 18 verbindet. Da die Ansteuerung der Erregerwicklung aller Relais R1 bis R4 in gleicher Weise erfolgt, zeigt die Fig. 3 nur die Ansteuerschaltung von zwei dieser Relais.

Damit die mittels der Verstellmotoren 10 bis 17 verstellbaren Teile selbsttätig in die gewünschte Position gebracht werden können, welche mittels der Tastatur 1 vorgegeben oder gewählt werden kann, sind für alle diese Teile Istwertgeber erforderlich, welche den Istwert über die Verbindungsleitung 8 an die Elektronik 2 weiterleitet, welche aufgrund eines Istwert-Sollwert-Vergleiches den zugehörigen Verstellmotor so steuert, daß der Sollwert erreicht wird.

Um die Verarbeitung der Istwerte möglichst einfach zu gestalten, sind auch die den Verstellmotoren 10 bis 17 oder den von diesen verstellbaren Teilen zugeordneten, durch je ein Potentiometer P10 bis P17 gebildeten Istwertgeber in zwei Gruppen zusammengefaßt. Die Potentiometer P10, P12, P14 und P16 sind einerseits an eine gemeinsame erste Zuleitung 26 und andererseits an eine allen Potentiometern gemeinsame Zuleitung 27 angeschlossen. Abweichend hiervon sind die Potentiometer P11, P13, P15 und P17 an eine gemeinsame erste Zuleitung 28 angeschlossen. Die beiden ersten Zuleitungen 26 und 28 können wahlweise mit Hilfe eines Wechselkontaktsatzes des Gruppenwahlschalters 21 mit dem einen Pol einer Referenzspannung verbunden werden, während die Zuleitung 27 mit dem anderen Pol verbunden ist. Der Abgriff jedes der Potentiometer P10 bis P17 ist über einen Widerstand 29 mit einer Meßspannungsstelle 30 verbunden. Wie Fig. 4 zeigt, werden nur vier Meßspannungsstellen 30 benötigt, weil jeweils ein Potentiometer der einen und der anderen Gruppe an jede dieser Meßspannungsstellen 30 angeschlossen ist. Der Widerstandswert der Widerstände 29 ist wesentlich größer gewählt als der Widerstandswert der Potentiometer. Hierdurch wird der Fehler minimal gehalten, der dadurch entsteht, daß der aus den beiden mit derselben Meßspannungsstelle 30 verbundenen Widerstände 29 gebildete Spannungsteiler nicht mit der Zuleitung 27 verbunden ist. Von den vier Meßspannungsstellen 30 aus werden die Istwerte über die Verbindungsleitung 8 zur Elektronik 2 übertragen, wo sie im Bedarfsfalle gespeichert werden können. Sofern eine Speicherung erfolgen soll, kann durch einen Kontaktsatz des Gruppenwahlschalters 21 für die eine Gruppe ein anderer Speicherbereich in einem Digitalspeicher als für die andere Gruppe ausgewählt werden. Daher ist auch der zusätzliche Aufwand für die Speicherung der Istwerte der zweiten Gruppe sehr gering. Durch die vorstehend beschriebene gruppenweise Zusammenfassung der Istwertgeber entfällt die Notwendigkeit einer Einzelumschaltung der Istwertgeber.

<u>P a t e n t a n s p r ü c h e</u>

1. Steuereinrichtung für eine Mehrzahl von Verstellmotoren eines Kraftfahrzeuges mit dem Ein- und Ausschalten sowie der Drehrichtungsumkehr der Verstellmotoren dienenden Relais und einer der Ansteuerung der Relais und/oder dem Zugang zu einer Elektronik dienenden Tastatur, <u>dadurch gekennzeichnet,</u> daß jeder der Verstellmotoren (10 bis 17) einer ersten oder einer zweiten Gruppe zugeordnet ist, die mittels eines Gruppenwahlschalters (21) auswählbar sind, und daß jedes der als Motorschalter dienenden, einen Wechslerkontakt (k1 bis k4) aufweisenden Relais (R1 bis R4) mit seiner einen Schaltstrecke im Stromkreis eines der der ersten Gruppe zugeordneten Verstellmotoren (10,12,14, 16) und mit seiner anderen Schaltstrecke im Stromkreis eines der zweiten Gruppe zugeordneten Verstellmotor (11,13,15,17) liegt.

2. Steuereinrichtung nach Anspruch 1, dadurch gekennzeichnet, daß die beiden Schaltstrecken aller als Motorschalter dienender Relais (R1 bis R4) an eine erste Zuleitung (18) angeschlossen sind und daß je eine zweite Zuleitung (19,20) von einer ersten Schaltstrecke des Gruppenwahlschalters (21) zu allen Verstellmotoren (10,12,14,16) der ersten Gruppe und von einer zweiten Schaltstrecke des Gruppenwahlschalters (21) zu allen Verstellmotoren (11,13,15,17) der zweiten Gruppe geführt ist.

3. Steuereinrichtung nach Anspruch 2, dadurch gekennzeichnet, daß die erste Zuleitung (18) sowie eine zu beiden Schaltstrecken des Gruppenwahlschalters (21) führende Verbindungsleitung (31) über je ein Drehrichtungswahl-Relais (R5,R6) wahlweise mit dem einen oder anderen Pol der Spannungsquelle verbindbar sind.

4. Steuereinrichtung nach einem der Ansprüche 1 bis 3, dadurch gekennzeichnet, daß die Erregerwicklung aller der einem Verstellmotor (10,12,14,16) der ersten Gruppe und einem Verstellmotor (11,13,15,17) der zweiten Gruppe zugeordneten Relais (R1 bis R4) einerseits mit Masse und andererseits mit dem Ausgang eines Inversionsgliedes (25) verbunden ist, das zwei Eingänge hat, von denen der eine als Eingang für die Schaltbefehle dient und der andere mit einem Wechslerkontakt des Gruppenwahlschalters (21) verbunden ist, mittels dessen dieser Eingang wahlweise mit Masse oder der Versorgungsspannung verbindbar ist.

5. Steuereinrichtung nach einem der Ansprüche 1 bis 4, dadurch gekennzeichnet, daß die Verbindung zwischen der Tastatur (1) und der wenigstens einen Speicher enthaltenden Elektronik (2) mit einer Schnittstelle (5) versehen ist, zu der die Steuerleitung (6) für die Relais (R1 bis R6) geführt sind.

6. Steuereinrichtung nach einem der Ansprüche 1 bis 5, dadurch gekennzeichnet, daß zumindest einem Teil der Verstellmotoren (10 bis 17) oder der von ihnen verstellbaren Teile je ein Istwertgeber (P10 bis P17) zugeordnet ist und diese Istwertgeber vorzugsweise unter Umgehung der Schnittstelle (5) an die Elektronik (2) angeschlossen sind.

7. Steuereinrichtung nach Anspruch 6, dadurch gekennzeichnet, daß die je als Potentiometer (P10 bis P17) ausgebildeten Istwertgeber einerseits alle an eine zum einen Pol einer Referenzspannung führende Leitung (27) und andererseits je nachdem, ob sie einem Verstellmotor der ersten oder der zweiten Gruppe zugeordnet sind, an eine erste bzw. zweite Versorgungsleitung (26,28) angeschlossen sind, die wahlweise mittels eines Wechslerkontaktes des Gruppenwahlschalters (21) mit dem anderen Pol der Referenzspannungsquelle verbindbar sind, und daß der Abgriff jedes Potentiometers (P10, P12, P14, P16),das einem Verstellmotor der ersten Gruppe zugeordnet ist, über einen Widerstand (29), dessen Widerstandswert wesentlich größer ist als derjenige des Potentiometers, mit einer Meßspannungsstelle (30) verbunden ist, mit der auch der Abgriff eines der Potentiometer (P11, P13,P15,P17), die einem Verstellmotor der zweiten Gruppe zugeordnet sind, über einen derartigen Widerstand (29) verbunden ist.

- 10 -

8. Steuereinrichtung nach Anspruch 7, dadurch gekennzeichnet,daß alle Meßspannungsstellen (30) mittels des Gruppenwahlschalters (21) wahlweise mit der einen oder anderen
von zwei Speicherbereichen des Speichers der Elektronik (2)
verbindbar sind.

- . -

0133183

1/2

## Fig.1

Tastatur 1

Elektronik 2

3  5

6

7  Ansteuerschaltung
und Motoren

4

8

## Fig.2

23

R5

R6

31  19  10

21

18

20

11  k1

R1

12  k2

R2

13

14  k3

R3

15

16  k4

R4

17

KEIPER

Reg-Nr: 126 554

0133183

2/2

# Fig.3

# Fig.4

KEIPER

Reg-Nr: 126 554

Europäisches
Patentamt

**EUROPÄISCHER RECHERCHENBERICHT**

Nummer der Anmeldung

EP 83 10 7218

| | **EINSCHLÄGIGE DOKUMENTE** | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
| X | EP-A-0 001 297 (ROBERT BOSCH GmbH) <br> * Seite 21, Zeile 10 - Seite 22, Zeile 22; Seite 7, Zeilen 5-18; Figur 7 * <br><br> --- | 1-3 | B 60 N 1/02 |
| A | DE-A-2 933 098 (KEIPER AUTOMOBILTECHNIK) <br> * Seite 5, Zeile 9 - Seite 7, Zeile 33; Figur * <br><br> --- | 6,7 | |
| A | GB-A-2 013 367 (NISSAN MOTOR) <br> * Seite 1, Zeilen 35-40; Seite 1, Zeile 53 - Seite 2, Zeile 9; Seite 4, Zeilen 2-25; Figuren 1A-3 * <br><br> ----- | 1,6,7 | RECHERCHIERTE SACHGEBIETE (Int. Cl. ³) <br><br> B 60 N 1/00 <br> H 02 P 7/00 |

Der vorliegende Recherchenbericht wurde für alle Patentansprüche erstellt.

| Recherchenort | Abschlußdatum der Recherche | Prüfer |
|---|---|---|
| DEN HAAG | 13-03-1984 | WEIHS J.A. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82